# EUROPEAN PATENT SPECIFICATION

(11) **EP 1 214 168 B1**
(45) Date of publication and mention of the grant of the patent: **07.04.2004**
(21) Application number: 00904524.6
(22) Date of filing: 21.01.2000
(51) Int. Cl.: B23K 9/127

(54) **SYSTEM FOR MONITORING AND CONTROLLING A WELDING/BRAZING OPERATION**
VERFAHREN ZUM ÜBERWACHEN UND STEUERN EINES SCHWEISS -ODER LÖTBETRIEBS
SYSTEME DE CONTROLE ET DE COMMANDE D'UNE OPERATION DE SOUDURE/BRASAGE

(43) Date of publication of application: 19.06.2002
(73) Proprietor: GENERAL ELECTRIC COMPANY, Schenectady, NY 12345 (US)
(72) Inventor: LARRANAGA, Javier, Ignacio, Bristol, CT 06010 (US); CRINITI, Joseph, New Britain, CT 06052 (US); NEWTON, William, Alber, Jr., Plainville, CT 06052 (US)
(74) Representative: Goode, Ian Roy
(86) International application number: PCT/US2000/001732
(87) International publication number: WO 2001/053031

(56) References cited:
- US-A- 4 454 408
- US-A- 5 275 327

## Description

### BACKGROUND OF THE INVENTION

The present invention relates generally to resistance welding/brazing operations and in particular, to an improved resistance welding construction that utilizes a non-contact temperature sensor for providing an improved bond between the welded materials and the brazing materials.

The monitoring and control of resistance spot welding devices are well known in the art. Recent prior art constructions have focused on the displacements of the electrodes during welding to achieve an improved welding operation. For example, U.S. Patent No. 5,789,719 is directed to the fixing of the electrodes against outward displacement when the metal workpieces expand during the application of welding current and permitting inward displacement of the electrodes after the softening of the metal nugget.

However, the prior art resistance welding arrangements are still less than satisfactory. That is, the quality of the resistance weld is sensitive, and therefore dependent on a variety of factors, such as the temperature of the electrodes during use. This temperature may vary, for example, during start-up, where the first few welds may require a longer time to produce a satisfactory weld. Additionally, electrode erosion or electrode wear will produce unsatisfactory results because the current transfer from the electrodes to the material is compromised creating resistance variations. Additionally, variations in the weld can be produced by differences in the material's quality, on the material's finish, or the interface coating on the materials. One or all of these variations can occur at any given moment in a resistance brazing process and the welding operator needs to compensate for the foregoing variables by adjusting the welding control parameters (time, % current, cycles) to achieve satisfactory results. This intensive and accurate human interface in the resistance brazing process can lead to undesirable, and less than satisfactory results.

An attempt at improving the resistance welding operation is described in U.S. Patent No. 5,672,943. However, this U.S. Patent more particularly focuses its improvement methodology on the forces applied to the electrodes during operation to improved the welding process.

It is difficult to evaluate finished products for their quality of braze without sophisticated sonar and/or other techniques, and therefore, it is desirable to provide a system for monitoring and controlling a resistance welding operation that both improves the quality of the products produced thereby while simultaneously reducing the intensive and accurate interfacing needed between the system and the system operator. The present invention disclosed herein achieves the aforementioned and below mentioned objectives.

### SUMMARY OF THE INVENTION

Generally speaking, in accordance with the invention, a system for monitoring and controlling a brazing operation on a workpiece is provided. In the preferred embodiment, the system comprises a welding apparatus having spaced apart electrodes. Electrode pressure is utilized to force the workpiece together. A current is applied through the workpiece to create, over time and with pressure, sufficient heat to melt a brazing material in the workpiece. Heat is generated by the resistance of the workpiece to the flow of electricity. The system also includes a controller for controlling the brazing operation, the controller for controlling the duration of time during which current flows through the workpiece. In accordance with the invention, also provided is a non-contact sensor, such as an infrared sensor, that is coupled to the controller, and measures the temperature of the interface or brazing material. In this way, upon a predetermined temperature measured by the sensor, the controller causes the application of current to the workpiece to terminate.

Accordingly, it is an object of the present invention to provide an improved system for monitoring and controlling a resistance welding operation.

Another object of the present invention is to provide an improved product formed by a resistance welding/brazing operation.

Another object of the present invention is to provide a system for monitoring and controlling a resistance welding operation that requires minimal human interfacing.

Another object of the present invention is to provide a system for ensuring a more uniform and properly distributed brazing material in a welded/brazed product.

Still another object of the present invention is to provide the optimal operating parameters for the brazing material, regardless of the duration the resistance welding apparatus has been operating, the corrosion, wear or oxidation on the electrodes or the materials to be brazed.

Yet another object of the present invention is to optimize the production of resistance welded products by virtue of the improved automated process available by utilization of the present invention.

Still other objects and advantages of the invention will in part be obvious and will in part be apparent from the specification, such as preventing material annealing or softening through a brazing operation.

### DETAILED DESCRIPTION OF THE PREFERRED EMBODIMENTS

Generally speaking, systems are known which form a basis for welding/brazing operations in accordance with the present invention. Hereinafter, reference to a welding or brazing material, apparatus or operation should be understood to mean a "welding/brazing" material, apparatus or operation. The system includes a temperature sensor such as infrared sensor, a welding apparatus and a controller for controlling both the welding/brazing operations and for interfacing with the sensor, details of which will be discussed hereinafter.

Welding apparatus may be any one of a plurality of welding apparatuses currently known, as the present invention is easily adaptable and integratable therewith. As such, the details of welding apparatus will be omitted herein for simplicity although the basic operations thereof will now be discussed for the convenience of the reader.

Welding apparatus is particularly suitable for welding and a brazing operation in particular. Welding apparatus may include a rigid frame with flanges (not shown) extending along one side thereof. The frame may include suitable fastening devices for securing apparatus to a larger housing or stand. A larger housing or platform (not shown) will securedly support welding apparatus.

Welding apparatus may include a slide bar to which is fixedly mounted a first arm and a second arm. Arms assist in balancing the pressure exerted on a workpiece by a pair of oppositely mounted electrodes. Slide bar may be reciprocally movable along a rail along a surface of the frame. A biasing member such as a spring, hydraulic or pneumatic cylinder may be coupled to slide bar via a threaded rod. In this manner, slide bar is movable towards workpiece.

Second arm includes a mounting bracket having an elongated member mounted to slide bar. Extending from the other end of bracket is an "L-shaped" member, which may be integrally formed therewith. An end of member includes a conventional electrode holder which supports a conventional electrode. Electrical current is delivered via a current supply to electrode by conductive material disposed within the electrode holder and member. Electrical current is carried from a supply of electrical power (not shown) through a power bar via a wire (not shown) within second arm. The wire is preferably flexible to facilitate movement (if any) of second arm. Electrode may be threadably removable from member.

By way of example, first arm may include an inner cylinder having a piston-like rod supporting an electrode holder and electrode.

In operation, the pressurization of the cylinder causes the extension of rod downwardly, thereby causing electrode to move towards workpiece. The cylinder is sufficiently pressurized to place a predetermined pressure (or squeezing force) on workpiece. The squeezing force sufficiently holds the electrodes firmly in contact with the workpiece. As would be understood in the art, the force would vary according to the composition of the workpiece and the electrodes themselves. Further details of a suitable welding apparatus can be found in prior art documents, such as U.S. Patent No. 5,789,719. However, it must be kept in mind that the welding apparatus has been somewhat modified from that described in the '719 patent as the details thereof are not critical to the present invention.

As would be understood by one of ordinary skill in the art, a critical objective of any resistance/brazing operation is to properly account for the composition of electrodes and the workpiece to be brazed so that enough heat can be produced to melt an interface material (brazing material) and bond the two components together. In particular, workpiece may be comprised of two materials such as a tungsten layer and a copper layer, with silver used as brazing material. For a proper brazing operation, brazing material must reach its proper melting temperature for a proper length of time. The amount of time current is applied to the electrodes impacts the peak temperature of the brazing material. Too little time and the brazing material will not flow properly, while excessive heat may cause the brazing material to migrate to undesirable areas, and also could introduce annealing to workpiece.

Accordingly, in accordance with the present invention, the sensor, which may be an infrared sensor, is provided within the system. The sensor, which may be any type of non-contacting heat detecting sensor, is preferably mounted on a bracket which may be fixedly secured to the housing. The sensor preferably includes a visible light source to assist in positioning the sensor at the correct position. The sensor may also be selected as a function of the materials to be brazed, and therefore can vary accordingly. This selection will also vary according to the desired brazing material temperature to be measured. One of ordinary skill would, based on the present disclosure, be readily able to select the proper sensor. An electrical connection, via a wire, is preferably made between the controller and the sensor.

The controller, as stated above, controls the welding/brazing operation in a manner well understood by one skilled in the art. The controller, which also interfaces with the sensor, additionally monitors the temperature at the interface of the materials being brazed. The temperature is measured by the sensor. As would be understood, the positioning of sensor proximate workpiece and the focusing thereof on the brazing material achieves the very precise non-contact measuring and monitoring of the brazing operation, in particular the melting of the brazing material.

In operation, the temperature of the brazing material can now be accurately measured by the sensor and monitored by the controller. The controller includes an interface unit(not shown) where the temperature set points are entered for the particular application. The interface unit outputs the signal to the current switch devices (not shown) in apparatus to terminate the current. The controller samples the data from the sensor and when in the correct threshold, it will disconnect current from a current supply. The controller can also send the data collected by the sensor to a main computer (not shown). The data can be, if desired, displayed on a monitor to printed through a printer. The controller can now more accurately control the duration of the brazing operation and hence the temperature of the interface material. By such a control operation, the controller can more accurately determine when the interfacing material has reached the proper interface alloy flow temperature and therefore, when the current to the electrodes should be terminated. When the flow of current stops the electrode force is maintained for a short period of time to allow the solidification of the brazing material to occur. In this way, the temperature of brazing material 18 is monitored independently of the electrode temperature, the electrode and/or material composition, and/or any corrosion formed thereon. Therefore the temperature of the brazing material and quality of the weld can be independently and accurately maintained.

It is also to be understood that the following claims are intended to cover all of the generic and specific features of the invention described herein and all statements of the scope of the invention which as a matter of language might fall therebetween.

Additionally positioned temperature sensors can be used in addition to the single sensor disclosed above to achieve an even more accurate and improved quality resistance welded product.

## Claims

1. A system for monitoring and controlling a welding/brazing operation on a workpiece, the workpiece comprising a first material, a second material spaced apart therefrom, and a brazing material disposed therebetween, the brazing material having a lower melting point than either of the first or second materials, the system comprising:
a welding apparatus having a first electrode and a second electrode spaced apart therefrom, current supply means for applying a current through the first electrode, the brazing material, the second electrode sufficient to melt the brazing material;
a controller for controlling the brazing operation, the controller for controlling the duration of time during which current flows through the workpiece;
non-contact sensor means, coupled to the controller, for measuring the temperature of the brazing material;
wherein upon a predetermined temperature measured by the non-contact sensor means, the controller causes the current supply means to terminate the application of current to the workpiece.

2. The system as claimed in claim 1, wherein the non-contact sensor means includes at least one infrared sensor positioned proximate the brazing material when the first electrode is in contact with the first material and the second electrode is in contact with the second material and the current supply means is applying a current therethrough sufficient to melt the brazing material.

3. The system as claimed in claim 1, wherein the first material comprises tungsten and the second material comprises copper and the brazing material comprises silver.

## Patentansprüche

1. System zum Überwachen und Steuern eines Schweiß/ Hartlötvorganges an einem Werkstück, wobei das Werkstück eine erstes Material, ein zweites Material im Abstand davon und ein dazwischen angeordnetes Hartlötmaterial aufweist, wobei das Hartlötmaterial einen niedrigeren Schmelzpunkt als entweder das erste oder zweite Material hat, wobei das System enthält:
eine Schweißeinrichtung mit einer ersten Elektrode und einer zweiten Elektrode im Abstand davon, eine Stromversorgungseinrichtung zum Zuführen von genügend Strom durch die erste Elektrode, das Hartlötmaterial, die zweite Elektrode, um das Hartlötmaterial zu schmelzen,
eine Steuerung zum Steuern des Hartlötvorgangs, wobei die Steuerung die Dauer der Zeit steuert, während der Strom durch das Werkstück.fließt,
eine kontaktlose Sensorvorrichtung, die mit der Steuerung verbunden ist, zum Messen der Temperatur des Hartlötmaterials,
wobei bei einer vorbestimmten Temperatur, die durch die kontaktlose Sensorvorrichtung gemessen wird, die Steuerung die Stromversorgungseinrichtung veranlasst, die Stromzufuhr zum Werkstück zu beenden.

2. System nach Anspruch 1, wobei die kontaktlose Sensorvorrichtung wenigstens einen Infrarot-Sensor aufweist, der nahe dem Hartlötmaterial angeordnet ist, wenn die erste Elektrode mit dem ersten Material in Kontakt ist und die zweite Elektrode mit dem zweiten Material in Kontakt ist und die Stromversorgungseinrichtung einen ausreichenden Strom hindurchleitet, um das Hartlötmaterial zu schmelzen.

3. System nach Anspruch 1, wobei das erste Material Wolfram aufweist und das zweite Material Kupfer aufweist und das Hartlötmaterial Silber aufweist.

## Revendications

1. Système pour contrôler et commander une opération de soudage/brasage sur une pièce, la pièce comprenant un premier matériau, un deuxième matériau espacé par rapport à celui-ci, et un matériau de brasage placé entre eux, le matériau de brasage ayant un point de fusion inférieur à ceux des premier et deuxième matériaux, le système comprenant :
un appareil de soudage comportant une première électrode et une deuxième électrode espacée par rapport à celle-ci, un moyen d'alimentation électrique pour faire passer un courant dans la première électrode, le matériau de brasage, la deuxième électrode, suffisant pour faire fondre le matériau de brasage ;
un dispositif de commande pour commander l'opération de brasage, le dispositif de commande pour commander la durée pendant laquelle un courant circule dans la pièce ;
un moyen formant capteur sans contact, couplé au dispositif de commande, pour mesurer la température du matériau de brasage ;
dans lequel, à une température prédéterminée mesurée par le moyen formant capteur sans contact, le dispositif de commande fait arrêter la circulation de courant dans la pièce par le moyen d'alimentation électrique.

2. Système selon la revendication 1, dans lequel le moyen formant capteur sans contact comprend au moins un capteur infrarouge positionné à proximité du matériau de brasage quand la première électrode est en contact avec le premier matériau et que la deuxième électrode est en contact avec le deuxième matériau et que le moyen d'alimentation électrique y fait passer un courant suffisant pour faire fondre le matériau de brasage.

3. Système selon la revendication 1, dans lequel le premier matériau comprend du tungstène et le deuxième matériau comprend du cuivre et le matériau de brasage comprend de l'argent.
